# EUROPÄISCHE PATENTANMELDUNG

(11) **EP 1 415 532 A1**
(43) Veröffentlichungstag der Anmeldung: **06.05.2004**
(21) Anmeldenummer: 03405727.3
(22) Anmeldetag: 09.10.2003
(51) Int. Cl.: A01G 9/12

(54) **Vorrichtung zum Anbringen von Blumen und Pflanzen**

(30) Priorität: 31.10.2002 CH 18282002
(71) Anmelder: Ruedi, Näf, 6374 Buochs (CH)
(72) Erfinder: Ruedi, Näf, 6374 Buochs (CH)

(57) **Zusammenfassung**

Eine Vorrichtung, bestehend aus Vertikal-Teil, Pftanzengefäss und Halter, zum Anbringen von Blumen und Pflanzen an Objekten in einer neuen Art. Insbesondere ist die Vorrichtung geeignet um hohe Pflanzen an Objekten sicher und in der Höhe verstellbar anzubringen.
Fig. 1 zeigt die Vorrichtung als solche in den Grundteilen, wobei der Vorbehalt für das Anbringen weiterer Teile jeglicher Art beansprucht wird.
Fig. 2 zeigt die Vorrichtung montiert vor einer Balkonbrüstung resp. -Geländer. Man sieht eine angebrachte Bewässerungs-Vorrichtung, bestehend aus Gebinde und Förderschlauch.
Fig. 3 zeigt die Vorrichtung montiert vor einem Fenster.
Fig. 4 Zeigt die Vorrichtung mit mehreren Vertikal-Teilen und einem Gefäss, geeignet für mehrere Pflanzen.
Fig. 5 zeigt ein Beispiel einer zusammengebauten Vorrichtung, bestehend aus Vertikal-Teil, Halter und Pflanzengefäss.
Fig. 6+7 zeigen nur zwei von vielen Beispielen zum Anbringen der Vorrichtung an Objekten.
Fig. 8 zeigt die Vorrichtung mit angebrachten Teilen, die Pflanzen ermöglichen sich hoch zu winden.

## Beschreibung

### Technisches Gebiet

Die Erfindung betrifft eine Vorrichtung zum Anbringen von Blumen und Pflanzen jeglicher geeigneter Art. Die Vorrichtung kann im Freien, in Wohn-, Büro-, und Industrieräumen und insbesondere an Balkonen innen und aussen, sowie aussen an Fenstem und im Fassadenbereich allgemein eingesetzt werden.

### Stand der Technik

Es sind Blumengefässe zum Anbringen an Objekten, insbesondere an Balkonen in verschiedenster Art bekannt. Es ist aber praktisch unmöglich, hohe (bis 2.5 m) Pflanzen zu setzen, da sie in dem Blumengefäss nicht richtig auf äussere Krafteinwirkung geschützt werden können. So wird bei Wind die Pflanze meist geknickt. Das Anbringen von Stützen gestaltet sich meist schwierig. Ist die Stütze fest verbunden mit dem Gefäss, so ist ein ünwerfen der ganzen Vorrichtung meist die Folge bei Winddruck auf die Pflanzen. Durch die beschriebenen Probleme ist die Gestaltung der Anbringung von Pflanzen an Objekten, insbesondere an Balkonen bis heute eingeschränkt gewesen, da Blumen meist nur in geringer Höhe gepflanzt werden konnten und zudem hohe Pflanzen sich zu hoch z. B. über eine Balkonbrüstung erhoben.

### Darstellung der Erfindung

Die Erfindung ermöglicht im Speziellen, hohe, mittelhohe und niedere Pflanzen in einer bisher nicht gekannten Art an Objekten anzubringen. Durch den an einem Pflanzengefäss fest angebrachten Vertikal- Teil und dem am Vertikal- Teil angebrachten Halter ist es nun möglich, da der Schwerpunkt des Eigengewichtes der Vorrichtung sich weit unter dem Halter befindet, auch sehr hohe Pflanzen an Objekten ohne die bisherigen Probleme anzubringen. Durch das tief unter dem Halter gelegene Hauptgewicht der Vorrichtung ist bei Angriff des Windes zwar ein Schrägdrücken der ganzen Vorrichtung mit der Pflanze möglich. Bei nachlassen der äusseren Krafteinwirkung richtet sich durch das Eigengewicht die Vorrichtung selbstständig wieder senkrecht aus oder es kann mit einfachem manuellem Richten die Ausrichtung vorgenommen werden. Wächst die Pflanze höher, kann der Schwerpunkt durch tiefer stellen günstig verändert werden, um die beschriebenen Probleme positiv zu beeinflussen. Die Vorrichtung ermöglicht bei Anwendung in der an Objekten angehängten Version, ein stufenloses Einstellen der gewünschten Höhe, sodass die Pflanzen respektive Blumen, sich so präsentieren können, wie der Anwender es wünscht So kann mit mehreren, an gleichem Objekt montierten Vorrichtungen und deren verschieden eingestellten Höhen nebst den beschriebenen technischen Vorteilen ein sehr spezieller, dekorativer und vorher nicht gekannter Effekt erzielt werden.

Die Erfindung besteht aus einem in jeder Länge, jeglichem formlichen und masslichen Querschnitt und in jedem möglichen Material bestehendem Vertikal-Teil. An diesem Teil wird ein Pflanzen-Gefäss jeglicher Art, in jeglicher Form, Grösse und in jeglichem Material zur Aufnahme von Erde oder anderem für Wachstum von Pflanzen geeigneten Setzgrundes jeglicher möglichen Art, in jeder möglichen Montageart befestigt. In diesen Setzgrund werden Blumen oder Pflanzen gesetzt. Der Vertikal-Teil hat nebst der Funktion als feste Verbindung zum Pflanzentopf zugleich die Funktion die Pflanzen zu halten. Dies wird beispielsweise mit einer Schnur erreicht die am Vertikal-Teil und der Pflanze befestigt wird. Die Befestigung verhindert ein Durchbiegen der Pflanze und somit ein Brechen derselben bei Wind. Die Vorrichtung kann frei stehend am Boden oder an Objekten angehängt oder fest verbunden verwendet werden. Die Vorrichtung kann mit jeder möglichen Art der Befestigung (Halter) überall angebracht werden. Die in den Zeichnungen gezeigte n Varianten sind nur zwei Arten von vielen Möglichkeiten der Befestigung der Vorrichtung am jeweiligen Träger-Objekt.
Die Erfindung kann mit oder ohne einer eigens dazu entwickelten Bewässerungs-Vorrichtung jeglicher Art verwendet werden. Diese Bewässerungswrrichtung kann am Vertikal-Teil, am Halter oder am Objekt auf jede Art fixiert werden. Eine Bewässerungsvorrichtung kann auch im Vertikal- Teil ausgebildet werden. Das Rohr in der Funktion als Wasserleitung führt die Flüssigkeit dann direkt zur Pflanze.

Die Vorrichtung kann so ausgebildet sein, dass daran mit einem oder mehreren Drähten, Schnüren oder Stangen in jeglichem Material, eine Klettervorrichtung angebracht werden kann, die Kletterpflanzen ermöglicht, daran hochzuklettern, und sich somit einen Pflanzenturm bilden kann.

**Die Erfindung wird anschliessend anhand von Zeichnungen beispielsweise erläutert:**

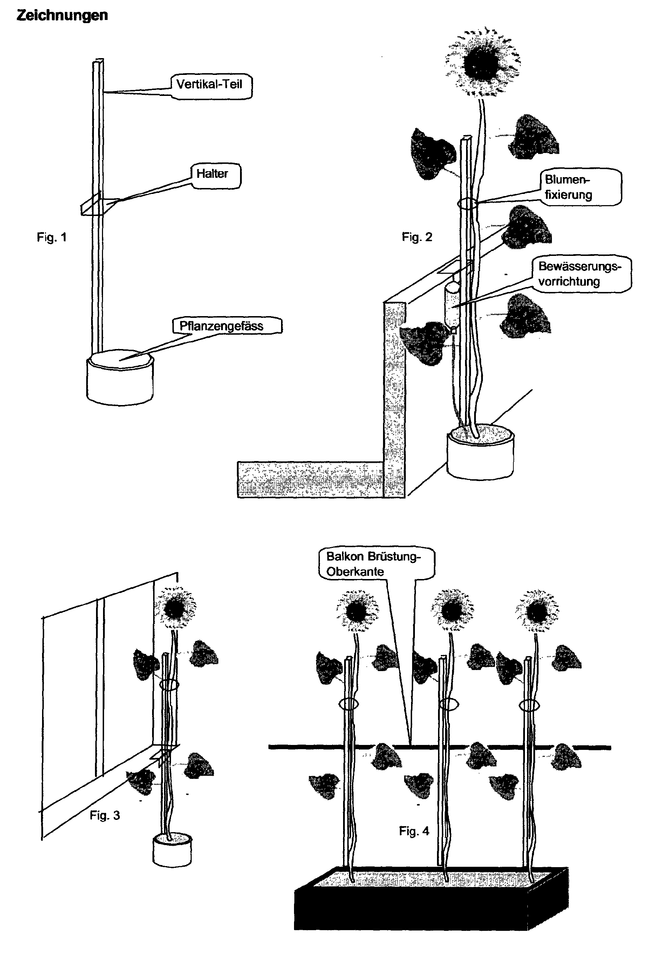

Fig. 1 zeigt die Vorrichtung als solche in den Grundteilen, wobei der Vorbehalt zum Anbringen weiterer Teile jeglicher Art beansprucht wird.
Fig. 2 zeigt die Vorrichtung montiert vor einer Balkonbrüstung resp. -Geländer. Man sieht eine Bewässerungs-Einrichtung, sichtbar als Beispiel, mit einem Wasserbehälter und einem Förderschlauch.
Fig. 3 zeigt die Vorrichtung montiert vor einem Fenster, mit speziell dafür geeignetem, hier nicht im Detail gezeigtem Halter.
Fig. 4 zeigt die Vorrichtung mit mehreren Vertikal-Teilen und einem Gefäss, geeignet für mehrere Pflanzen.

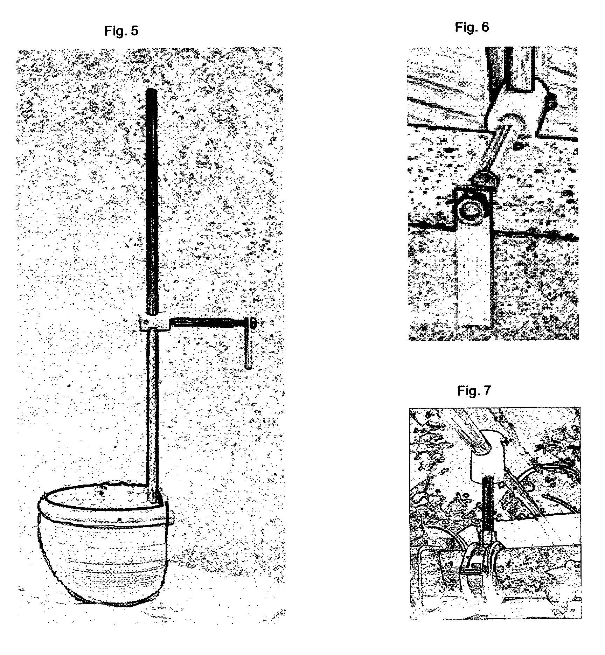

Fig. 5 zeigt ein Beispiel einer zusammengebauten Vorrichtung. Man sieht ein Vertikal-Teil, beispielsweise wie hier gezeigt aus einem Rohr bestehend, ein Beispiel eines Pflanzengefässes und das Beispiel eines Halters, der in der Höhe verstellbar ausgebildet ist und mittels Festziehen der Klemmschraube die vertikale Verschiebung am Vertikal- Teil blockiert. Die Verstellung könnte auch mit einem am Vertikal-Teil angebrachten Raster jeglicher Art oder mit einem sich selbst am Vertikal-Teil verklemmendem, stufenlos einstellbarem Halter geschehen.
Fig. 6 zeigt den schon in Fig. 5 beschriebenen Halter, wie er an einer Brüstung, an einem Geländer oder an anderen zum Anhängen geeigneten Objekten verwendet wird.

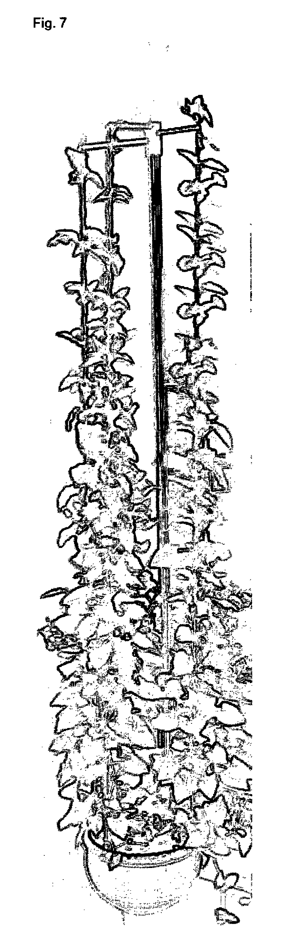

Fig. 7 zeigt als weiteres Beispiel einen Halter, der so ausgebildet ist, dass er speziell an Geländer-Rohren gut befestigt werden kann.
Fig. 8 zeigt die Vorrichtung als Beispiel mit 3 angebrachten Kletterseilen, an denen die geeigneten Kletterpflanzen sich hochwinden können.

## Patentansprüche

1. Vorrichtung **dadurch gekennzeichnet, dass** ein Pflanzengefäss von einem Vertikal-Teil gehalten wird. Am Vertikal-Teil ist ein Halter, der fix oder verstellbar angebracht werden kann. Die so entstandene Vorrichtung kann Pflanzen in jeder, (insbesondere hohe Pflanzen) Höhe aufnehmen, die mit der Vorrichtung an Objekten vorteilhaft angebracht werden können. Nebst den (im Beschrieb) erwähnten technischen Vorteilen werden gestalterische Vorteile erzielt.

2. Vorrichtung nach Anspruch 1, **dadurch gekennzeichnet, dass** der aufrechte Teil (genannt Vertikal-Teil) in jedem dazu geeigneten Material hergestellt werden kann, dass er aus einem Teil besteht oder in mehreren, steckbaren, verschraubbaren oder anderen Verbindungsarten verbundenen Teilen. Der Vertikal-Teil kam auch aus mehreren verschiedenen Materialien wie (nur beispielsweise erwähnt) Rohr und Gewindestange oder Rohr und Vollstange in gleichen oder verschiedenen Durchmessern ausgebildet sein. Der Vertikal Teil kann auch in flexiblem Material, wie Seil, Schnur, Kette in jeglichem Material ausgeführt werden.

3. Vorrichtung nach Anspruch 1, **dadurch gekennzeichnet, dass** die Art des Anbringens des "Pflanzengefässes" in jeder möglichen Konstruktion, z.B. geschraubt, geleimt oder sonst irgendwie am Vertikal Teil befestigt wird. Insbesondere ändert sich die Art der Aufhängung, wenn das Pflanzengefäss als Tasche resp. wie ein Sack ausgebildet ist.

4. Vorrichtung nach Anspruch 1, **dadurch gekennzeichnet, dass** der Vertikal Teil insbesondere wenn er in Metall, Kunststoff oder in einem sonst dazu geeigneten Material hergestellt ist, direkt in eine Halterung für das Pflanzen-Gefäss umgeformt ist, sodass Vertikal Teil und Pflanzen Gefäss-Befestigung in einem Teil in jeglicher Form und Dimension ausgebildet ist.

5. Vorrichtung nach Anspruch 1 und 4, **dadurch gekennzeichnet, dass** der Vertikal Teil und das Pflanzen-Gefäss in einem Teil z. B. in Kunststoff oder Metall oder jedem anderen dazu geeigneten Material hergestellt wird.

6. Vorrichtung nach Anspruch 1 und allen anderen Ansprüchen, **dadurch gekennzeichnet, dass** die Art der Befestigung der Vorrichtung so verschieden eingerichtet oder konstruiert werden kann, dass die Anbringung an jeglichem Objekt, in jeglicher Art sein kann. (Fig. 1,2,3,5,6,7) sind lediglich Beispiele der Anbringung der Vorrichtung an Objekten mit einem beispielsweise gezeigten "Halter".

7. Vorrichtung nach Anspruch 1 und allen anderen Ansprüchen, **dadurch gekennzeichnet, dass** der Vertikal- Teil eine geeignete Länge für ganz hohe Blumen resp. Pflanzen (Zeichnung: Fig. 2 Beispiel Sonnenblume) aufweist. Der Vertikal- Teil kann aber auch für mittlere oder ganz kurze Pflanzen ausgebildet werden und ist somit auf jede gewünschte Länge angepasst. Die Verbindung zwischen Vertikal- Teil und Halter kann so konstruiert sein (Zeichnung Fig: 5,6,7), dass durch festziehen einer Fixierungs-Schraube am Halter oder einem am Vertikal-Teil auf jede Art angebrachten Raster, eine Höhen-Verstellung möglich ist.

8. Vorrichtung nach Anspruch 1 und allen anderen Ansprüchen, **dadurch gekennzeichnet, dass** mehrere aufrechte Vertikal Teile, (beliebige Anzahl) mit einem grösseren Pflanzen Gefäss verwendet werden, und somit mit mehreren Pflanzen gesetzt werden können. (Zeichnung: Fig. 4)

9. Vorrichtung nach Anspruch 1, **dadurch gekennzeichnet, dass** der Vertikal-Teil so ausgebildet ist, das er verschiedene Pflanzengefässe verschiedener Produzenten aufnehmen kann. Diese werden dann einfach in eine eigens dazu angebrachte Einrichtung gestellt. Der Vertikal-Teil ist aber als solcher ein einzelner Teil, mit integrierter Vorrichtung zur Aufnahme der Gefässe.

10. Vorrichtung (Fig. 8) nach Anspruch 1 und allen anderen Ansprüchen, **dadurch gekennzeichnet, dass** Kletterteile in verschiedener Ausführung angebracht werden können und somit geeigneten Kletter-Pflanzen ein Hochwinden ermöglicht wird.
